# EUROPÄISCHE PATENTSCHRIFT

(11) **EP 0 842 058 B1**
(45) Veröffentlichungstag und Bekanntmachung des Hinweises auf die Patenterteilung: **06.03.2002**
(21) Anmeldenummer: 97929090.5
(22) Anmeldetag: 05.06.1997
(51) Int. Cl.: B60H 1/34

(54) **BELÜFTUNGSDÜSE FÜR KRAFTFAHRZEUGE**
VENTING NOZZLE
BUSE D'AERATION POUR VEHICULES A MOTEUR

(30) Priorität: 14.06.1996 DE 19623765
(43) Veröffentlichungstag der Anmeldung: 20.05.1998
(73) Patentinhaber: ADAM OPEL AG, 65423 Rüsselsheim (DE)
(72) Erfinder: FRIK, Steffen, D-55299 Nackenheim (DE); WERNER, Frank, D-64625 Bensheim (DE); MÜLLER, Werner, D-64853 Otzberg (DE)
(86) Internationale Anmeldenummer: DE9701139
(87) Internationale Veröffentlichungsnummer: WO9747488

(56) Entgegenhaltungen:
- DE-A- 2 134 008
- DE-A- 2 847 678
- DE-B- 2 340 749

## Beschreibung

Die Erfindung bezieht sich auf eine Belüftungsdüse für Kraftfahrzeuge zur annähernd ganzflächigen Luftbeaufschlagung von Windschutzscheiben der Kraftfahrzeuge. Diese Belüftungsdüsen mit den im Oberbegriff des Patentanspruchs 1 angegebenen Merkmalen sind an sich bekannt.

Beispielsweise in der DE 23 38 328 A1 ist eine derartige Düse beschrieben. Ein sich meißelförmig verbreiterndes und dabei zuspitzendes Düsengehäuse beinhaltet Luftleitelemente, so daß Luft fächerförmig möglichst eine gesamte Windschutzscheibe beaufschlagt. Dies gelingt mit Hilfe derartiger Düsen jedoch nur bedingt und die Luftleitelemente sind Ursache für Leistungsverluste und starke Geräuschbildungen. Vergleichbare Aussagen sind auch zu der Belüftungsvorrichtung nach DE 35 41 284 C1 oder auch nach EP 0 566 474 A1 zu machen.

Nach der EP 0 470 904 B1 wird eine Windschutzscheibe mittels zweier Belüftungsdüsen mit Luft beaufschlagt, wobei hier eine breite Auffächerung des Luftstromes durch einen aufwendigen Anschluß der Düsen an je zwei Luftleitungen erreicht werden soll. Die Querschnittsflächen der beiden Belüftungsdüsen variieren über der Höhe der Düsengehäuse. Die sich in jedem Gehäuse vermischenden Luftströme verwirbeln stark, was zu Leistungsverlusten und Geräuschen führt. Mit einer gleichmäßigen Scheibenbeaufschlagung ist hier nicht zu rechnen.

Es sind weitere Lösungen bekannt (EP 0 560 774 B1; DE 34 07 670 C2; DE 37 01 081 A1), wo Luftdüsen einen oder mehrere Schlitze aufweisen, aus denen Luft in Richtung Windschutzscheibe austreten kann.

Es ist Aufgabe der Erfindung, eine einfach aufgebaute und damit mit geringem Aufwand herstellbare Belüftungsdüse der genannten Art zu schaffen, mit Hilfe derer eine Windschutzscheibe nahezu ganzflächig und gleichmäßig mit Luft beaufschlagbar ist, wobei diese Belüftung mit geringen Leistungsverlusten und bei nur schwacher Geräuschbildung möglich sein soll.

Zur Lösung dieser Aufgabe zeichnet sich die erfindungsgemäße Belüftungsdüse durch alle im Patentanspruch 1 angegebenen Merkmale aus. Bei Nutzung einer derartigen Düse ist eine Windschutzscheibe schnell, ganzflächig und sehr gleichmäßig beschlag- und eisfrei zu halten. Einzelheiten der Erfindung ergeben sich aus den Patentansprüchen 2 bis 7.

In der Belüftungsdüse, speziell innerhalb eines Düsengehäuses wird Luft von einem Bereich, in dem eine Luftleitung (Zuleitung) angeschlossen ist, bis zu einem Luftauslaß gefördert. Im allgemeinen erfolgt dieser Förderprozeß im wesentlichen aufwärts, so daß also die Höhe von der Luftleitung aus in Richtung Luftauslaß zunimmt. Üblich sind auch schräg liegende Belüftungsdüsen oder Düsen mit bogenförmigen Gehäusewandungen. Vereinfachend gilt im folgenden, daß, wenn von zunehmender Höhe die Rede ist, der Weg der Luft vom Bereich der Düsenzuleitung bis zum Luftauslaß gemeint ist, auch wenn die Luft dabei horizontale Streckenabschnitte passiert.

Das Gehäuse der Belüftungsdüse ist derart gestaltet, daß mit zunehmender Höhe die Breite der Düse zunimmt. Seitliche Gehäusewandungen sind dazu bogenförmig gestaltet, wobei die zunehmende Düsenbreite einer Funktion zumindest zweiter Ordnung folgt. Gleichzeitig nimmt die innere Querschnittsfläche der Düse mit zunehmender Höhe ab, so daß im Bereich des Luftauslasses die geringste Querschnittsfläche vorhanden ist.

Mit der abnehmenden Querschnittsfläche nimmt die Luft-Strömungsgeschwindigkeit im Düsengehäuse zu. Es kommt dabei trotz Verbreiterung des Düsengehäuses jedoch nicht zum Abriß der Strömung, da die Düsenverbreiterung kontinuierlich erfolgt. Die Luft füllt das Düsengehäuse voll aus, ohne daß Verwirbelungen entstehen. Das Verhältnis von zunehmender Düsenbreite und abnehmendem Düsenquerschnitt ist dafür entscheidend. Die Querschnittsfläche nimmt prozentual zumindest soviel ab, wie die Düsenbreite zunimmt. Dabei ist es von Vorteil, wenn die mit zunehmender Düsenhöhe erfolgende Abnahme der inneren Düsenquerschnittsfläche nicht einer linearen Funktion, sondern einer Funktion zumindest zweiter Ordnung folgt. Die Querschnittsfläche sollte sich im unteren Düsenbereich schneller verringern als im oberen Bereich des Luftauslasses.

Das Anlegen der Strömung an die schrägen Seitenwände des Düsengehäuses wird zusätzlich positiv beeinflußt, wenn das Düsengehäuse über der Höhe und Breite der Düse eine nicht konstante Tiefe aufweist. Da die Breite der Düse mit der Höhe zunimmt und dabei die Querschnittsfläche abnehmen soll, muß sich die Tiefe der Düse mit zunehmender Höhe verringern. Positiv ist, wenn die Düse derart gestaltet ist, daß sich die Tiefe der Düse im mittleren Bereich (Windschutzscheibenmitte) mit zunehmender Düsenhöhe stärker verringert als in den seitlichen Düsenrandbereichen. Insbesondere in der unteren Hälfte der Düse wird dadurch zusätzlich erreicht, daß die Luft in die seitlichen Düsenbereiche verdrängt wird. Damit werden Strömungsablösungen innerhalb der Düse vermieden. Ohne Vorhandensein von Luftleitlamellen in der Düse wird erreicht, daß die Düse eine keilförmige Luftströmung verläßt, die zur nahezu ganzflächigen Beaufschlagung einer Windschutzscheibe geeignet ist. Die Scheibenfläche kann sehr gleichmäßig beaufschlagt werden, was zur gleichmäßigen Freihaltung der Scheibe von Eis und Beschlag führt. Da die Düse ohne Lamellen und ohne extreme Luftumlenkungen auskommt, entstehen im Betrieb nur geringe Geräusche und ebenfalls geringe Leistungsverluste.

Details der Erfindung werden anhand eines Ausführungsbeispiels beschrieben. Von den zugehörigen Zeichnungen zeigt:
- Fig. 1:: eine erfindungsgemäße Belüftungsdüse außerhalb eines Kraftfahrzeugs in schematischer Darstellungsweise;
- Fig. 2:: Draufsicht auf die Düse nach Fig. 1;
- Fig. 3:: die in Fig. 1 gezeigte Belüftungsdüse bei teilweiser ausgebrochener Darstellungsweise (Ausbruch entsprechend Schnitt IV-IV in Fig. 1);
- Fig. 4:: eine Schnittdarstellung nach Linie IV - IV in Fig. 1;
- Fig. 5:: eine Schnittdarstellung nach Linie V - V in Fig. 3;
- Fig. 6:: ein Diagramm zur Verdeutlichung der Düsengeometrie;
- Fig. 7:: ein weiteres Diagramm zur Verdeutlichung der Düsengeometrie.

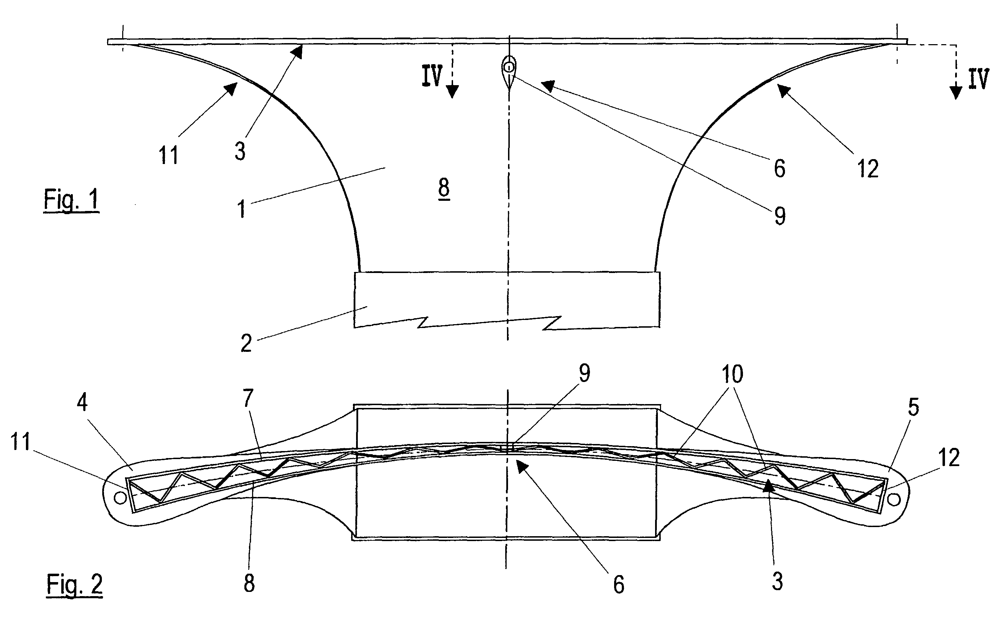

Die Fig. 1 und 2 zeigen eine Belüftungsdüse 1, mittels derer eine Windschutzscheibe eines Kraftfahrzeugs mit Luft beaufschlagbar ist. Die Düse 1 ist an eine Luftleitung 2 einer Heizungs- und Belüftungsanlage des Kraftfahrzeugs angeschlossen und erstreckt sich von da aus im wesentlichen aufwärts bis zu einem Luftauslaß 3, der nahe unter der Windschutzscheibe liegt. Mittels der Belüftungsdüse 1 ist die Windschutzscheibe nahezu ganzflächig und sehr gleichmäßig mit Luft beaufschlagbar.

Die Düse 1, welche im wesentlichen aus einem Düsengehäuse besteht, weist im Bereich des Luftauslasses 3 zwei Befestigungsflansche 4, 5 auf. Des weiteren ist eine mittige Schraubstelle 6 vorgesehen. Das Gehäuse ist dazu mittig durchbohrt und Gehäusewandungen 7, 8 werden mittels einer stromlinienförmigen Abstützung 9 in konstantem Abstand zueinander gehalten. Die im Luftstrom befindliche Abstützung 9 beeinflußt die Strömungsverhältnisse nahezu nicht.

Nach der Düsenmontage schließt die Auslaßöffnung 3 etwa flächenbündig mit einer oberen Armaturentafelfäche des Kraftfahrzeugs ab. Es ist ein Gitter 10 als Teil des Düsengehäuses vorgesehen, so daß verhindert wird, daß Gegenstände in das Düseninnere fallen können. Die vordere Gehäusewandung 7 verläuft etwa parallel zu einem mittleren Abschnitt der Windschutzscheibe.

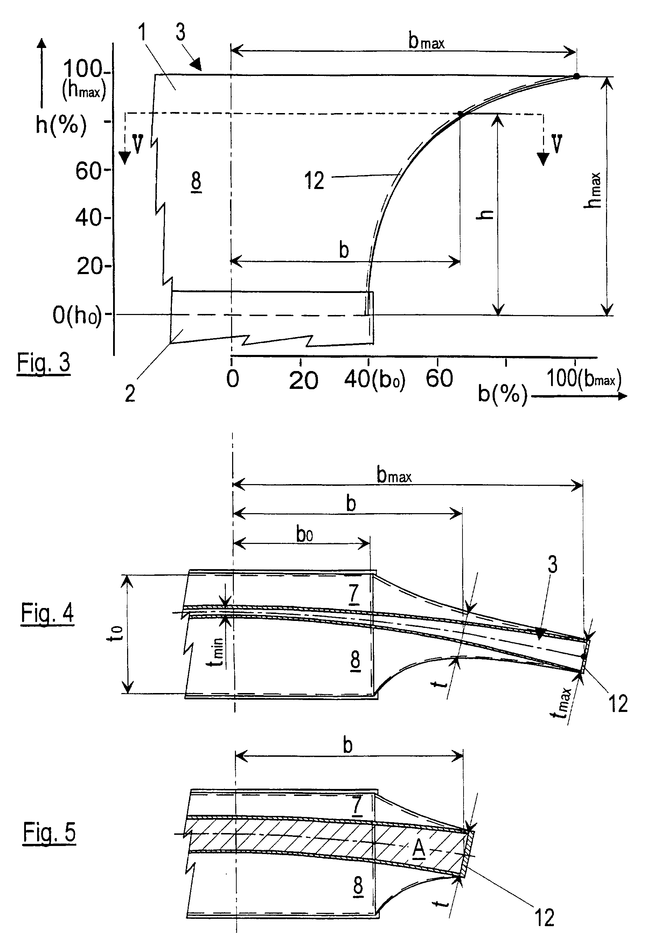

In Fig. 3 ist eine nahezu identische Fig. wie in Fig. 1 gezeigt, wobei hier das Gitter 10 abgeschnitten und wegen der Düsensymmetrie ein Ausbruch gezeigt ist. Diese und die folgenden Fig. dienen der detaillierten Verdeutlichung der Düsengeometrie, welche hier erfindungswesentlich ist.

Die Düsenhöhe h nimmt beginnend vom Bereich des Anschlusses an der Luftleitung 2 bis in den Bereich des Luftauslasses 3 zu. Dabei muß die Düse 1 nicht aufrecht stehen, sondern kann auch schräg oder relativ flach liegen bzw. auch gewunden sein.

Als weitere wesentliche Maße der Düse 1 sind die Breite b (hier dargestellt die Breite b bis zur Symmetrielinie) und die Tiefe t anzugeben, wobei beide Maße abhängig von der Höhe h der Düse 1 variieren. Die Breite b nimmt mit zunehmender Höhe h von b₀ bis bₘₐₓ zu und die Tiefe t der Düse nimmt mit zunehmender Höhe h ab. Seitliche Gehäusewandungen 11, 12 der Düse 1 begrenzen die Düse 1 in der Breite b. Im Beispiel sind diese Wandungen 11, 12 nur eindimensional gekrümmt, so daß sich ebene Schnittflächen (Fig. 4, 5) ergeben. Diese könnten jedoch auch gewölbt ausgeführt werden.

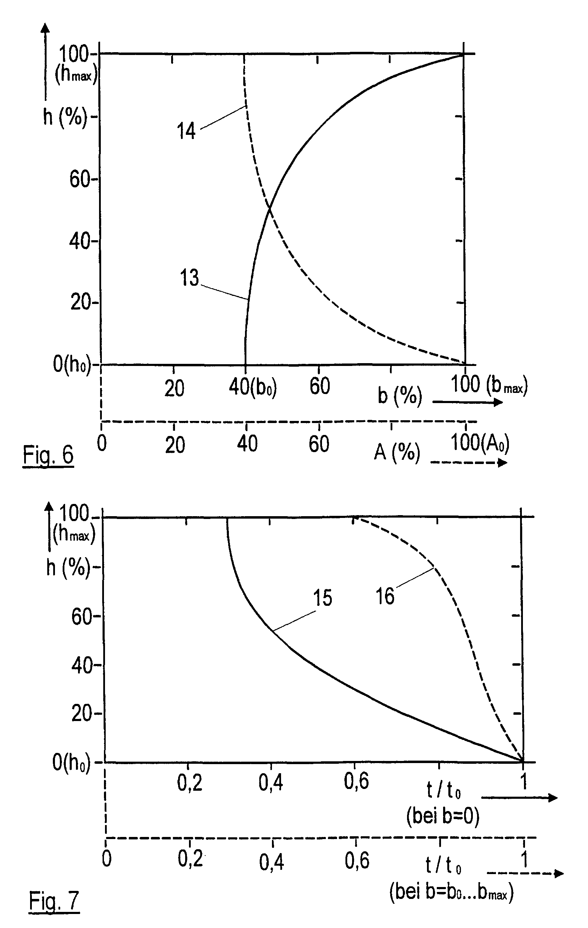

In Fig. 6 ist die Abhängigkeit der Düsenbreite b von der Düsenhöhe h mittels einer durchgezogenen Linie 13 aufgezeigt. Die Höhe h nimmt von 0 bis 100 % zu, wobei die Breite b von etwa 40 % des Endwertes bis auf den Endwert (100 %) zunimmt. Die Zunahme der Breite b folgt einer Funktion zweiter Ordnung.

Mit gestrichelter Linie 14 ist in Fig. 6 die Abhängigkeit der inneren Querschnittsfläche A der Düse 1 von der Düsenhöhe h aufgezeigt. Die Gehäusewandungen 7, 8 sowie die seitlichen Wandungen 11, 12 bestimmen die Querschnittsfläche A der Düse 1 und damit den Strömungsquerschnitt der Luft. Diese Querschnittsfläche A nimmt mit zunehmender Höhe h nach einer Funktion zweiter Ordnung ab. Die Abnahme erfolgt von etwa 100 % des Querschnitts der Luftleitung 2 bis auf etwa 40 % dieses Querschnittes im Bereich des Luftauslasses 3, also um etwa das Maß, um das die Breite b der Düse 1 prozentual zunimmt.

Da die Querschnittsfläche A der Düse 1 mit zunehmender Höhe h und damit zunehmender Breite b abnimmt, kann dies nur mit einer Abnahme der Tiefe t der Düse 1 verbunden sein. Die Tiefe t der Düse 1 ist jedoch nicht über die Breite b der Düse 1 konstant, sondern wird mit zunehmender Höhe h im Bereich der Düsenmitte wesentlich stärker verringert als im Bereich der seitlichen Gehäusewandungen 11, 12. In Fig. 7 ist dies verdeutlicht. In der Düsenmitte (durchgezogene Linie 15) verringert sich die Tiefe t der Düse 1 bis auf einen Minimalwert tmin, welcher etwa das 0,3fache der Ausgangstiefe t₀ im Bereich der Luftleitung 2 beträgt. Im Düsenrandbereich (gestrichelte Linie 16) verringert sich die Tiefe t nicht so stark. Im Bereich des Luftauslasses 3 ist die maximale Tiefe tₘₐₓ im Bereich der Breite bₘₐₓ zu finden und beträgt etwa das 0,6fache der Ausgangstiefe t₀.

Mit der Abnahme der Querschnittsfläche A erfolgt eine kontinuierliche Zunahme der Luft-Strömungsgeschwindigkeit innerhalb der Düse 1, wobei die Luft sich innerhalb des gesamten Düsengehäuses relativ gleichmäßig verteilt. Es kommt nicht zur Bildung von Luftablösungen innerhalb der Düse 1, da die Düsenbreite b sehr kontinuierlich (Funktion zweiter Ordnung; keine Knicke im Düsengehäuse) zunimmt. Da die Tiefe t der Düse 1 im Mittelbereich stärker abnimmt als außen, wird die Luft gleichmäßig in die äußeren Düsenbereiche gedrängt, so daß eine an den Düsenwandungen 11, 12 anliegende Strömung erzeugt wird. Dies wird sehr vorteilhaft ohne Verwendung von Lamellen innerhalb des Düsengehäuses erreicht. Die Geräuschbildung und Leistungsverluste sind im Betrieb der Düse 1 minimal.

Mit Hilfe der erfindungsgemäßen Düse 1 ist ein sehr stumpfer Luftaustrittswinkel (135° und mehr) erreichbar. Die Düsenbreite (zweimal bmax) kann deutlich geringer als die Breite der Windschutzscheibe sein und trotzdem wird eine nahezu ganzflächig gleichmäßige Luftbeaufschlagung der Windschutzscheibe erreicht.

## Patentansprüche

1. Belüftungsdüse (1) für eine annähernd ganzflächige Luftbeaufschlagung von Windschutzscheiben von Kraftfahrzeugen, mit einem an eine Luftleitung (2) angeschlossenen Düsengehäuse, welches mit zunehmender Höhe (h) eine zunehmende Breite (b) und eine abnehmende Tiefe (t) aufweist und welches im Bereich eines schlitzförmigen Luftauslasses (3) deutlich schmaler als die Windschutzscheibe ist, wobei die mit zunehmender Höhe (h) der Düse (1) zunehmende Breite (b) bogenförmig einer Funktion zumindest zweiter Ordnung folgt und die innere Querschnittsfläche (A) des Düsengehäuses dabei mit zunehmender Höhe (h) bis zumindest annähernd in den Bereich des Luftauslasses (3) abnimmt.

2. Belüftungsdüse (1) nach Anspruch 1, **dadurch gekennzeichnet, daß** die innere Querschnittsfläche (A) des Düsengehäuses mit zunehmender Höhe (h) prozentual zumindest in dem Maß abnimmt, wie die Breite (b) des Düsengehäuses zunimmt.

3. Belüftungsdüse (1) nach Anspruch 1 oder 2, **dadurch gekennzeichnet, daß** die mit zunehmender Höhe (h) der Düse (1) erfolgende Abnahme der inneren Querschnittsfläche (A) des Düsengehäuses einer Funktion zumindest zweiter Ordnung folgt.

4. Belüftungsdüse (1) nach zumindest einem der Ansprüche 1 bis 3, **dadurch gekennzeichnet, daß** die Tiefe (t) des Düsengehäuses mit zunehmender Düsenhöhe (h) abnimmt, wobei sich die Düsentiefe (t) zumindest in der unteren Düsenhälfte im Bereich der Scheibenmitte deutlich schneller verringert als in äußeren Düsenbereichen.

5. Belüftungsdüse (1) nach Anspruch 4, **dadurch gekennzeichnet, daß** die Tiefe (t) des Düsengehäuses im Bereich des Luftauslasses (3) in den äußeren Düsenbereichen etwa ein doppeltes Maß gegenüber dem mittleren Düsenbereich aufweist.

6. Belüftungsdüse (1) nach Anspruch 4 oder 5, **dadurch gekennzeichnet, daß** eine vordere, der Windschutzscheibe nahe gelegene Wandung (7) des Düsengehäuses im Bereich des Luftauslasses (3) eine zur Windschutzscheibe etwa parallele Kontur aufweist.

7. Belüftungsdüse (1) nach einem der Ansprüche 1 bis 6, **dadurch gekennzeichnet, daß** im Bereich des Luftauslasses (3) ein Luftgitter (10) und/oder zumindest ein Befestigungsflansch (4, 5) als Gehäuseelement vorgesehen ist.

## Claims

1. Ventilation nozzle (1) for air impingement over almost the whole surface of windscreens of motor vehicles, with a nozzle housing which is connected to an air pipe (2) and which has an increasing width (b) and a decreasing depth (t) with increasing height (h) and which in the region of a slot-like air outlet (3) is distinctly narrower than the windscreen, wherein the width (b) increasing with increasing height (h) of the nozzle (1) arcuately follows an at least quadric function and the inner cross-sectional area (A) of the nozzle housing at the same time decreases with increasing height (h) at least almost into the region of the air outlet (3).

2. Ventilation nozzle (1) according to claim 1, **characterised in that** the inner cross-sectional area (A) of the nozzle housing decreases with increasing height (h) in percentage at least to the extent that the width (b) of the nozzle housing increases.

3. Ventilation nozzle (1) according to claim 1 or 2, **characterised in that** the decrease in inner cross-sectional area (A) of the nozzle housing which occurs with increasing height (h) of the nozzle (1) follows at least a quadric function.

4. Ventilation nozzle (1) according to one or more of claims 1 to 3, **characterised in that** the depth (t) of the nozzle housing decreases with increasing nozzle height (h), wherein the nozzle depth (t) decreases distinctly faster at least in the lower half of the nozzle in the region of the middle of the windscreen than in outer nozzle regions.

5. Ventilation nozzle (1) according to claim 4, **characterised in that** the depth (t) of the nozzle housing in the region of the air outlet (3) in the outer nozzle regions is approximately double that in the middle nozzle region.

6. Ventilation nozzle (1) according to claim 4 or 5, **characterised in that** a front wall (7) of the nozzle housing located close to the windscreen in the region of the air outlet (3) has a contour approximately parallel to the windscreen.

7. Ventilation nozzle (1) according to any of claims 1 to 6, **characterised in that** in the region of the air outlet (3) is provided an air grille (10) and/or at least one mounting flange (4, 5) as a housing element.

## Revendications

1. Buse d'aération (1) pour diriger de l'air sur sensiblement la totalité de la surface de pare-brises de véhicules à moteur, comprenant un corps de buse connecté à une conduite d'air (2), dont la largeur (b) croît et la profondeur (t) décroît au fur et à mesure que la hauteur (h) augmente et qui, dans la région d'une sortie d'air (3) en forme de fente, est nettement plus étroit que le pare-brise, la largeur (b) qui augmente avec la hauteur (h) de la buse (1) suivant un arc de cercle conformément à une fonction du deuxième ordre au moins, et la section transversale (A) intérieure du corps de buse décroissant jusqu'au moins sensiblement dans le voisinage de la sortie d'air (3), au fur et à mesure que la hauteur augmente.

2. Buse d'aération (1) selon la revendication 1, **caractérisée en ce que** la section transversale (A) intérieure du corps de buse, lorsque la hauteur (h) augmente, décroît au moins dans la même proportion en pourcentage que la largeur (b) du corps de buse augmente.

3. Buse d'aération (1) selon la revendication 1 ou 2, **caractérisée en ce que** la diminution de la section transversale (A) intérieure du corps de buse lorsque la hauteur (h) du corps de buse augmente suit une fonction du deuxième ordre au moins.

4. Buse d'aération (1) selon au moins une des revendications 1 à 3, **caractérisée en ce que** la profondeur (t) du corps de buse décroît au fur et à mesure que la hauteur de buse (h) augmente, la profondeur de buse (t), au moins dans la moitié de buse inférieure diminuant nettement plus rapidement dans la zone du milieu du pare-brise que dans les zones extérieures de la buse.

5. Buse d'aération (1) selon la revendication 4, **caractérisée en ce que** la profondeur (t) du corps de buse, dans la région de la sortie d'air (3), dans les zones extérieures de la buse est sensiblement doublée par rapport à la zone médiane de la buse.

6. Buse d'aération (1) selon la revendication 4 ou 5, **caractérisée en ce qu'**une paroi (7) antérieure du corps de buse, voisine du pare-brise, présente un contour sensiblement parallèle au pare-brise dans la région de la sortie d'air (3).

7. Buse d'aération (1) selon une des revendications 1 à 6, **caractérisée en ce qu'**il est prévu dans la région de la sortie d'air (3), une grille (10) et/ou au moins un bord de fixation (4, 5) en tant qu'élément du corps.
